# EUROPEAN PATENT SPECIFICATION

(11) **EP 2 976 208 B1**
(45) Date of publication and mention of the grant of the patent: **05.04.2017**
(21) Application number: 14710920.1
(22) Date of filing: 19.03.2014
(51) Int. Cl.: B29C 51/26, B29C 51/02, B29C 51/00, B29C 51/08, B29C 51/14, B29C 51/18, B29C 51/44, B29L 9/00, B29K 105/12, B29C 70/46, B29C 70/54

(54) **A PROCESS FOR THERMOFORMING A PLATE-LIKE ELEMENT OF COMPOSITE POLYMER MATERIAL AND A MOULD OPERATING IN ACCORDANCE WITH THE PROCESS**
VERFAHREN ZUM THERMOFORMEN EINES PLATTENFÖRMIGEN ELEMENTS AUS EINEM VERBUNDPOLYMERMATERIAL UND ENTSPRECHEND DIESEM VERFAHREN GENUTZTE FORM
PROCÉDÉ DE THERMOFORMAGE D'UN ÉLÉMENT DE TYPE PLAQUE EN MATÉRIAU POLYMÈRE COMPOSITE ET MOULE FONCTIONNANT CONFORMÉMENT AU PROCÉDÉ

(30) Priority: 21.03.2013 IT PD20130070
(43) Date of publication of application: 27.01.2016
(73) Proprietor: COMPOSITE SOLUTIONS s.r.l., 23848 Oggiono (LC) (IT)
(72) Inventor: PASQUALIN, Stefano, I-31020 San Polo Di Piave (tv) (IT); SARTOR, Leo, I-31044 Montebelluna (tv) (IT); TOFFANO, Paolo Simone, I-35030 Saccolongo (pd) (IT)
(74) Representative: Susanetto, Carlo
(86) International application number: PCT/EP2014/055514
(87) International publication number: WO 2014/147130

(56) References cited:
- EP-A1- 2 090 423
- DE-U1- 20 207 919
- FR-A1- 2 647 051
- JP-A- 2008 279 700
- US-A- 5 494 546
- DATABASE WPI Week 200378 Thomson Scientific, London, GB; AN 2003-836800 XP002716823, -& JP 2003 181911 A (ASANO KENKYUSHO KK) 3 July 2003 (2003-07-03)

## Description

### Technical field

The present invention relates to a process for thermoforming a plate-like element of composite polymer material having the features set out in the preamble of the main claim. It also relates to a mould arranged to thermoform a plate-like element of composite polymer material in accordance with said process.

### Technological background

The present invention is susceptible of application in the field of the processing of thermoplastic polymer-matrix composite materials.

These materials are generally composed of a polymer matrix in which reinforcing fibres made from a different material, for instance from carbon, glass or another polymer, are embedded and provide the polymer matrix with high-level mechanical properties. These latter, in combination with the relevant lightness of these materials, make them highly regarded in the market.

The presence of the thermoplastic matrix makes this type of composite material advantageously suitable to be thermoformed, making it possible to produce components of a curved shape from planar plate-like elements using relatively simple working processes.

In a known thermoforming process, the plate-like element is first heated to a temperature at which the thermoplastic matrix softens and is then subject to deep-drawing by means of a mould of male-female type shaped appropriately as a function of the shape with which the plate-like element is to be provided.

In particular, the mould for the deep-drawing step comprises a male member and a female member, respectively shaped and counter-shaped in order to fit together, which may be moved towards one another at a predetermined pressure.

The planar plate-like element interposed between the male and female members is then subject to a plastic deformation caused by the movement of the male member against the female member.

In order to prevent, or at least limit, the formation of folds and creases in the plate-like element during this process of plastic deformation, the peripheral region of the plate-like element is preferably held by appropriate clamps.

The plate-like element may be held in various ways, using fixed clamps or clamps able to move towards the male and female members of the mould during deformation (the clamps may, for instance, be secured on the mould by means of springs, or may be controlled to move by appropriate hydraulic jacks).

As a further alternative, the clamps may engage with and hold the peripheral region of the plate-like element over its entire periphery or only at specific portions of that peripheral region (for instance at the corners).

The category of composite materials also includes a family of materials in which both the polymer matrix and the reinforcing fibres are made from the same base polymer, albeit with different properties. Materials are known, for instance, in which both the polymer matrix and the reinforcing fibres are made from polyolefin materials, in particular polypropylene. In these materials, which are highly regarded because they can be fully recycled, the reinforcing fibres are oriented and are formed by a first type of polypropylene having a high melting point and high-level mechanical properties, and are at least partially covered by a coating layer formed by a second type of polypropylene having a lower melting point and inferior mechanical properties. The properties of the reinforcing fibres may be obtained by mechanical treatment, for instance by subjecting the polypropylene fibres to a "stretching" process, and/or by a different process of polymerization entailing a higher molecular weight.

Examples of composite materials of this type include the products marketed under the trade names PURE^{®} (produced by Lankhorst B.V.), CURV^{®} (produced by Propex Fabrics GmbH) and ARMORDON^{®} (produced by Don and Low Ltd), all of which are covered by the term "self- reinforced polypropylene".

Composite materials analogous to those cited above but based on polyester polymer, in particular polyethylene terephthalate (PET), are also known.

These materials are generally supplied by their manufacturing firms in the form of sheets, wound in rolls, formed by tapes interwoven as fabric, and containing the above-described reinforcing fibres, or, as an alternative, in the form of planar plates obtained from these sheets, where a predetermined number of said sheets are superimposed and are then subject to temperature and pressure conditions such as to melt the polypropylene used as a coating layer (and having a lower melting point) so that the superimposed sheets become one single piece.

The planar plates may also be obtained from superimposed sheets formed by woven strips or fibres of stretched polyolefin material, advantageously spaced by sheets of thermoplastic material having a lower melting point which act as a binder between the fabric sheets and are then subject to temperature and pressure conditions such as to melt the thermoplastic material with a lower melting point and bind the fabric sheets together.

In addition, sheets of a different chemical nature may be provided as layers external to the superimposed stack of fabric sheets in order to provide the plate with particular properties, for instance scratch-resistant properties, or a superior level of surface finish, or simply a different aesthetic.

In any case, the planar plates obtained in this way may be subsequently processed by thermoforming in order to provide them with the final shape of the articles to be produced, which may be, for instance, semirigid suitcase shells, motorcycle panniers, helmets, shin pads, tips for safety footwear or bumpers for motor vehicles.

The thermoforming process takes place in appropriate moulds, according to the working steps described above, and, in order to ensure that the process does not lead an to unsatisfactory surface finish, may be relatively complex both from the point of view of the regulation of the process parameters and in terms of the production and management of the mechanical components of the mould, the details of the clamps and their control devices.

DE 20207919 and JP 2008279700 disclose respective processes and moulds for thermoforming a plate-like element of polymer material.

It will be appreciated that, in the context of this specification and the appended claims, a "plate-like element" is to be understood as a member having a predominantly two-dimensional development, with a relatively small thickness which is at least one tenth lower than the two predominant dimensions, irrespective of the properties of rigidity of that member. In other words, a plate-like element may be rigid or readily deformable. In the same way, a plate-like element may be a unit which can be handled individually or may be formed by a plurality of separate and independent components such as, for instance, a stack of superimposed sheets.

Moreover, in the present specification and the appended claims, a pin designed to hold a plate-like element during a step of the thermoforming process is defined as having a "free end" when it is configured such that, during that stage, the plate-like element may be freely fitted on the pin and removed therefrom via said free end without removing further retaining members such as nuts or auxiliary frames from the pin.

### Description of the invention

The technical problem underlying the present invention is providing a process for thermoforming a plate-like element of composite polymer material and a mould arranged to operate in accordance with said process, which is structurally and functionally designed to remedy the drawbacks discussed above with respect to the cited prior art.

This problem is resolved by the present invention by a process for thermoforming a plate-like element of composite polymer material and a mould operating in accordance with said process, realised in accordance with the appended claims.

### Brief description of the drawings

Other advantages and features of the invention will become clear from the following detailed description of a preferred embodiment thereof, given with reference to the appended drawings which are provided purely by way of non-limiting example and in which:
- Fig. 1 is a diagrammatic view of a plant for thermoforming a plate-like element of composite polymer material, comprising a mould disposed to operate in accordance with the process of the present invention;
- Fig. 2 is a diagrammatic view of the mould of Fig. 1 in a non-operating position;
- Fig. 3 is a diagrammatic top view of a plate-like element disposed to be thermoformed in the mould of Fig. 2;
- Fig. 4 is a diagrammatic top view of a frame disposed to hold the plate-like element during thermoforming in the mould of Fig. 2;
- Fig. 5 is a diagrammatic view in cross-section of the plate-like element of Fig. 3 mounted on the frame of Fig. 4 before being processed in the mould of Fig. 2;
- Fig. 6 is a diagrammatic view in cross-section of a detail of a variant of the mould of Fig. 1.

### Preferred embodiment of the invention

In the appended drawings, a mould designed to thermoform a plate-like element 10 of composite polymer material according to the process of the invention is shown overall by 1.

In the preferred embodiment described here, the plate-like element 10 comprises a stack of superimposed sheets made from self-reinforced polypropylene, a material which, as mentioned above, comprises a plurality of reinforcing fibres, made from stretched polypropylene, covered by a matrix which is also polypropylene-based but has a lower melting point than the reinforcing fibres.

In particular, the polypropylene forming the reinforcing fibres has properties of mechanical strength and a melting point greater than the polypropylene forming the matrix.

The sheets are preferably made from ARMORDON^{®}, produced by Don & Low Ltd or from PURE^{®}, produced by Lankhorst BV.

The Applicant considers, however, that the process of the present invention may also be applied to plate-like elements made from different composite polymer materials, for instance based on polyethylene and its copolymers, for instance ethylene vinyl acetate (EVA), or self-reinforced PET, or based on polyamides or polyesters, mixed as polymers or alone, used for the reinforcing fibres and/or for the matrix.

Moreover, it is considered that the reinforcing fibres may also be formed by non-polyolefin polymers or from inorganic material such as glass or carbon.

The number of superimposed sheets of self-reinforced polypropylene used to form the plate-like element 10 is at least three and depends on the mechanical properties required of the final product and the degree of deformation to be imparted by thermoforming. The superimposed sheets of composite material are preferably between six and 20 in number.

The plate-like element 10 has a generally rectangular shape and has a central region 11 and a peripheral region 12 extending around the central region 11.

The dimensions of the plate-like element may vary widely and it may, for instance, have a length and a width of between 100 and 2000 mm and a thickness of between 0.5 and 5 mm.

The mould 1 comprises a bearing frame 2 and secured thereto a male member 3, which is appropriately shaped in a configuration which it is desired to impart to the plate-like element 10, and a female member, counter-shaped with respect to the male member 3, in order to match its configuration, according to operational steps known per se in moulding processes. The male member in particular comprises a projecting head 3a which may be received in a cavity 4a of the female member 4.

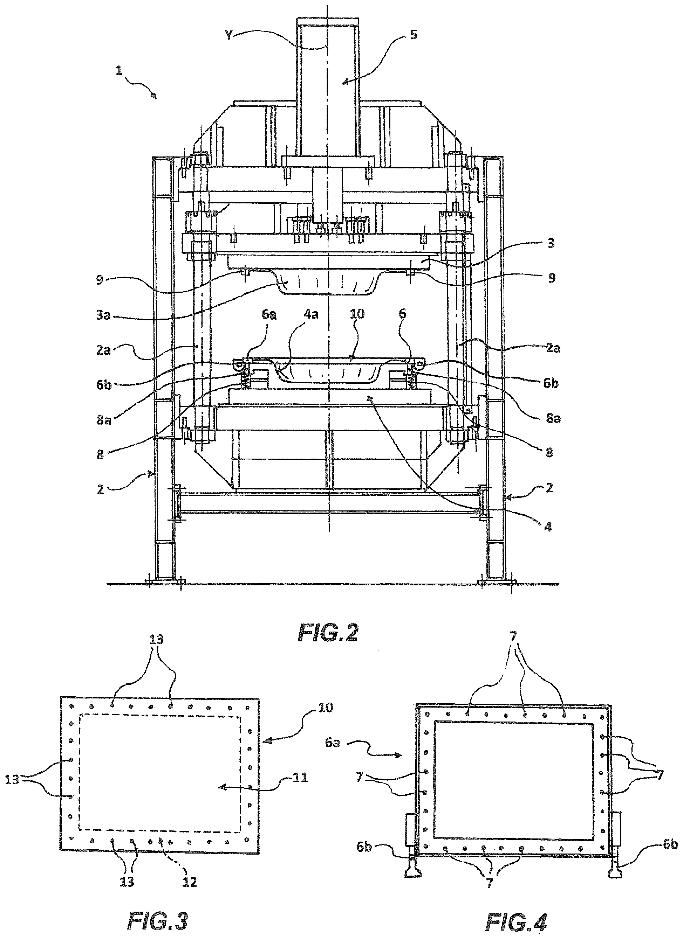

The male member 3 and the female member 4 may also be reciprocally moved between an operating position of the mould 1, in which they are pressed against one another, with the head 3a housed in the cavity 4a, and a non-operating position, shown in Fig. 2, in which they are spaced from one another, with the head 3a completely external to the cavity 4a.

The female member 4 is in particular fixed with respect to the bearing frame 2, while the male member 3 is coupled to uprights 2a of the moving frame 2 and may slide in a direction of displacement Y towards and away from the female member 4.

The mould 1 further comprises a movement device 5 disposed to displace the male member 3 towards and away from the female member 4 between said operating and non-operating positions.

The movement device 5 in particular comprises a mechanically or hydraulically actuated press associated with the male member 3 in order to displace it along direction Y and urge it against the female member 4 at a predetermined pressure.

The mould 1 further comprises a system for controlling the temperature of the male member 3 and the female member 4 able to keep the surfaces of the head 3a and the cavity 4a at a predetermined temperature.

The mould 1 further comprises a holding device 6 on which the plate-like element 10 is secured during the moulding step. In particular, the holding device 6 may be positioned with respect to the female member 4 such that the plate-like element 10, in particular its central region 11, is interposed between the male member 3 and the female member 4 when it is secured to said holding device.

The holding device 6 is particularly configured to hold the plate-like element 10 at its peripheral region 12, while the male member 3 and the female member 4 are displaced towards one another into the operating position so that they abut (and deform) the plate-like element 10 in its central region 11.

According to a preferred embodiment of the invention, the holding device 6 comprises a plurality of pins 7 having a free end 7a by means of which the pins 7 may engage the plate-like element 10 via a corresponding plurality of, preferably through, holes 13 obtained in its peripheral region 12.

The pins 7 are preferably all secured to a frame 6a configured so as to surround the cavity 4a of the female member 4 and all project from the same side in a manner substantially parallel to the direction of displacement Y. In particular, when the frame 6a is located with respect to the female member 4, all the pins 7 stand upright from the frame 6a with their respective free ends 7a facing the male member 3.

The pins 7 preferably have a cylindrical shape and the same diameter and project from the frame 6a to a minimum height of approximately 10 mm, and more preferably a height of between 15 mm and 30 mm. The pins 7 may project from the frame 6 to a substantially identical extent, or their height may be appropriately regulated in order to differentiate, where necessary, the precise moment at which the plate-like element 10 is released, as will be described in detail below.

Moreover, the pins 7 are disposed in sequence along the frame 6a covering the entire peripheral region 12, with a spacing of between 2 mm and 10 mm between one another.

In an alternative embodiment, not shown, the pins 7 may assume different configurations, for instance a broken line configuration, with a base portion adjacent to the frame 6a extending substantially parallel to the direction Y and a second portion, comprising the free end 7a of the pin, inclined so as to be slightly folded towards the central region 11 of the plate-like element 10. In this particular configuration, the release of the plate-like element 10 from the pins 7 via the free end 7a may be facilitated at a predetermined moment of the operation to deform the plate-like element 10, as will be described in further detail below.

In other embodiments of the invention, not shown in the drawing, the holding device 6 may comprise different types of elements suitable to restrain the peripheral region 12 of the plate-like element 10, for instance fixed or movable clamps.

According to a preferred embodiment of the invention, the frame 6a is a mobile frame and is detachably associated with the mould 1 so that it may be located or removed at will from its position with respect to the female member 4, depending on the process requirements, as will be explained in detail below. In particular, the frame 6a may be simply placed resting on the female member 4 of the mould, in an appropriate position for instance defined by a groove or by ribs or by reference marks, or, in the alternative, quick coupling means, such as clamps, may be provided in order to allow quick engagement and disengagement of the frame 6a onto and from the female member 4.

To make the frame 6a easier to handle, it may be provided with grip handles 6b, preferably of telescopic type.

According to a further preferred feature, the frame 6a is positioned with respect to the female member 4 so that it may be displaced with respect thereto, away from the male member 3, in the direction Y, towards a position in which the pins 7 are disengaged from the plate-like element 10.

To that end, the frame 6a is supported on a resiliently deformable member, for instance a support 8a supported by a plurality of appropriately calibrated springs 8.

The frame 6a is displaced against the action of the springs 8 towards the disengaged position by an extractor device mounted on the male member 3 and disposed to abut on the frame 6a when the male member 3 is displaced towards the operating position. In this way, the displacement of the frame 6a towards the disengaged position is determined by the displacement of the male member 3 towards the operating position.

The extractor device preferably comprises a plurality of projections 9 mounted on the male member 3 so as to surround the head 3a and extending towards the female member 4 so as to be substantially aligned with the frame 6a with respect to the direction Y.

The extent to which the projections 9 project from the male member 3 may preferably be adjusted, for instance by a short-pitch screw coupling which enables its accurate and precise calibration.

In a preferred manner, the projections 9 are adjusted such that the frame 6a is displaced into the disengaged position, thereby releasing the plate-like element 10 from the pins 7, when the male member 3 has not yet been fully displaced into the operating position.

In a preferred manner, the projections 9 are adjusted such that the frame is displaced into the disengaged position when the male member 3 and the female member 4 are at a distance of between 5 mm and 30 mm from the operating position.

If the holding device 6 does not comprise a plurality of pins 7, but one or more clamps restraining the peripheral region 12, the disengagement of the plate-like element 10 may be obtained by providing the clamps with an actuator which causes the opening of the clamps when the male member 3 and the female member 4 are at a predefined distance from the operative position.

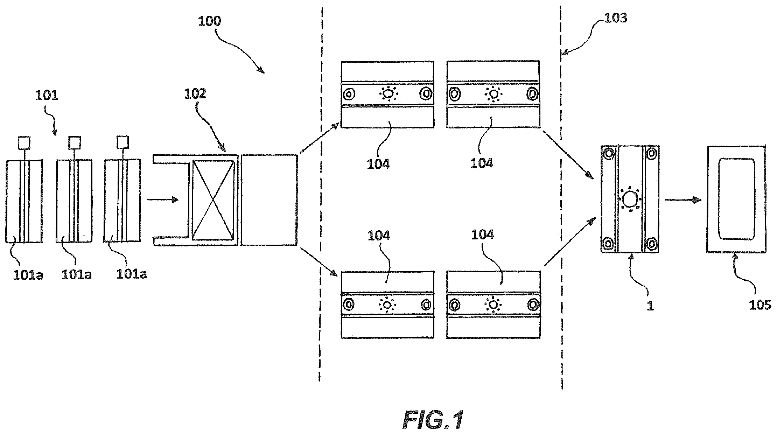

In the preferred embodiment shown here, the mould 1 is part of a thermoforming plant 100 shown diagrammatically in Fig. 1.

The plant 1 comprises a first station 101 for the preparation of the plate-like element 10, in which the various sheets 10a of composite material are cut from respective rolls 101a and superimposed on one another so as to form a stack with a predetermined number of superimposed sheets separate from one another.

In a preferred variant, one or a plurality of reinforcing members of a material differing from the sheets 10a may be interposed between the sheets 10a. The reinforcing members may be formed, for instance, by mesh strips of basalt, glass, carbon or polyaramide fibre positioned at the regions which, once the plate-like element has been thermoformed into the desired final product, correspond to those regions most exposed to the risk of impacts and deformation, in particular the corner regions.

These mesh strips are preferably of wide mesh so as to enable direct contact between the sheets 10a between which the reinforcing strips are interposed and therefore their stable reciprocal coupling by means of the partial fusion of the polymer material forming them.

Moreover, depending on the position that they are to assume in the final thermoformed article and their elongation properties, the mesh strips may be appropriately connected to one or a plurality of pins 7 during the stage of insertion of the stack of sheets 10a on the frame 6a, thereby making it possible also to determine the position of the mesh strips with respect to the remaining sheets of the plate-like element 10 in a more or less unequivocal manner.

In a further variant, one or a plurality of sheets of thermoplastic polyolefin material, for instance non-oriented polypropylene, may be interposed between the sheets 10a in order to form a spacing layer between the sheets 10a of composite material.

The stack of superimposed sheets 10a forming the plate-like element 10 is then conveyed to a second station 102 in which its peripheral region 12 is drilled in order to obtain the holes 13.

The holes 13 are preferably obtained by displacing previously melted composite material using an appropriate instrument provided with a plurality of pointed projections which, when heated to a temperature greater than the melting temperature of the composite material forming the plate-like element 10, are caused to pass through the plate-like element 10.

It is preferable, moreover, for each of said projections, to the rear of the point designed to pass through the plate-like element 10, to bear a flange which is also heated and disposed to bear on the area surrounding each hole 13 so as to melt the composite material in that zone without, however, displacing it. In this way, a small area of substantially homogeneous material is formed around each hole 13 and has no points that could promote the beginning of tears in the plate-like element.

The plate-like element 10 is then preferably mounted on the mobile frame 6a such that the free ends 7a of the pins 7 pass through the holes 13. In this way, the plate-like element 10 is held in engagement by the pins 7 and may be disengaged via the free ends 7a.

If the holding device 6 does not comprise a plurality of pins 7, but one or more clamps, the peripheral region 12 may not be drilled in order to obtain holes 13 and the plate-like element 10 is restrained by means of the clamps provided on the mobile frame 6a.

The mobile frame 6a, with the plate-like element 10 mounted on it, is displaced, using the grip handles 6b, to a consolidation station 103 in which the plate-like element 10 is subject to a heating and pressure stage in order at least partially to melt the matrix of the composite material so as to make the superimposed sheets rigid with one another.

This consolidation operation preferably takes place only in the central region 11, while the peripheral region 12 remains unconsolidated, with the sheets of the stack remaining separate and independent.

The consolidation station 103 comprises one or a plurality of presses 104, comprising a fixed abutment surface on which the central region 11 of the plate-like element 10 bears, while the mobile frame 6a surrounds the abutment surface.

A moving head of the press 104 is then lowered on the abutment surface at a predetermined pressure, preferably of between 5 and 30 bar, and is held in position for a predetermined time, preferably for a period of time of between 5 and 15 minutes, depending on the properties of the composite material.

The abutment surface and the moving head are also appropriately heated to a temperature of between 120°C and 180°C enabling the partial fusion of the propylene forming the matrix of the composite material.

However, if the sheets 10a forming the plate-like element 10 are made of a different material, pressure and/or temperature will be properly defined, for instance, if the material is self-reinforced polyethylene terephthalate, the correct temperature to be used in this consolidation step is from 220°C to 250°C.

In a preferred embodiment, a finish sheet 10b of thermoplastic polymer material is disposed on the stack of composite material sheets 10a, in an external position with respect to said stack, in order to provide the plate-like element 10 with a desired surface finish.

Preferably, a sheet of paper 10c for sublimation printing ("sublimation" paper), on which a desired graphical decoration is provided, is disposed above the finish sheet 10b, on the side opposite the stack of composite material sheets 10a.

In this way, during the step of heating and pressure of the plate-like element 10 in the consolidation station 103, the printing of the graphical decoration present on the paper is obtained by sublimation printing on the finish sheet 10b.

Advantageously, the pressure and temperature conditions of sublimation printing are compatible with the pressure and temperature values of the consolidation of the composite material sheets 10a, and the relatively long times required by this stage make it possible to obtain a surface finish of the plate-like element 10 which is optimum in terms of quality.

After the consolidation station 103, the mobile frame 6a is conveyed, together with the plate-like element 10, to the mould 1 in which the plate-like element 10 is subject to thermoforming.

The plate-like element 10 reaching the mould 1 has its central region 11 consolidated, while, in its peripheral region 12, the superimposed sheets 10a and, if used, the sheets 10b and 10c, are separate from one another.

Keeping the plate-like element 10 on the frame 6a after the step of consolidation of the central region 11 makes it possible to prevent any problems of retraction of the composite material forming the plate-like element 10 caused by the heating of the central region 11 (shrinkage). In this way, the plate-like element 10 arrives at the mould 1 to be subjected to plastic deformation, with its entire perimeter pre-tensioned.

The mobile frame 6a is positioned at the location of the female member 4 on the support 8a so that the central region 11 of the plate-like element 10 is aligned between the head 3a of the male member 3, appropriately displaced into the non-operating position, and the cavity 4a of the female member 4, and such that the peripheral region 12 of the plate-like element 10 surrounds the cavity 4a.

The male member 3 and the female member 4 are both kept at a temperature controlled by an appropriate temperature control system (not shown).

Preferably, the female member 4, in particular the cavity 4a, is kept at a temperature of between 10 and 40°C, while the male member 3, in particular the head 3a, is kept at a temperature of between 10 and 50°C.

The male member 3 is then displaced into the operating position and, during that displacement, the head 3a abuts on the plate-like element 10 in its central region 11 and subjects it to plastic deformation by displacing it within the cavity 4a.

The deformation generated in the plate-like element 10 causes the peripheral region 12 to move in traction towards the central region 11 which is countered by the presence of the pins 7 engaged in the holes 13.

The displacement of the male member 3 towards the operating position is then completed, such that the head 3a is pressed against the cavity 4a of the female member 4 at a pressure of between 15 and 40 bar.

This pressure is preferably maintained for a period of time of between 1 and 4 minutes so as to impart the configuration defined by the head 3a and the cavity 4a to the central region 11 of the plate-like element 10 and make it stable.

Thereafter, the male member 3 is raised from the female member 4 and displaced into the non-operating position so as to enable the thermoformed plate-like element 10 to be removed from the mould 1 and conveyed to a subsequent trimming station 105 in which the central region 11 of the plate-like element 10 is appropriately trimmed by removing the peripheral region 12.

In the case of small deformations, in which the traction to which the plate-like element 10 is subject does not bring about substantial tears in the sheets 10a, the pins 7 remain engaged in the corresponding holes 13, during the entire stage of displacement of the male member 3 into the operating position and the subsequent period in which it is kept pressed against the female member 4. In this type of deformation, use is made of the residual elongation of the fibres of the composite material and then the deformation to which the plate-like element is subject at the holes 13 which are elongated and allow the composite material to flow towards the cavity 4a.

In the case of more substantial deformations, in which the traction exerted by the head 3a on the plate-like element 10 could fully tear the peripheral region 12 at the holes 13, with a resulting release of the pins 7 and a lack of homogeneous action to hold the plate-like element 10, the pins 7 may be disengaged from the holes 13 before the male member 3 is fully displaced into the operating position.

The possibility that the plate-like element may tear completely at the holes 13 and allow the pins 7 to escape from the lateral edge of the plate-like element obviously depends on various factors, including the type of composite material, the number of sheets used and the degree of deformation imparted by the mould 1.

The Applicants have in particular observed that when the composite material is self-reinforced polypropylene of the type of ARMORDON^{®} or of PURE^{®}, with a number of superimposed sheets of between three and 30, it is preferable for the pins 7 to be disengaged from the holes 13 when the elongation required of the plate-like element is greater than a value of approximately 15%.

The disengagement of the plate-like element 10 from the pins 7 should preferably take place at a minimum distance from the operating position so as not to cause a flow of material towards the cavity 4a which is too rapid and uncontrolled.

The pins 7 are preferably disengaged from the holes 13 when the male member 3 is at a distance of between 5 mm and 30 mm from the operating position.

The disengagement of the pins 7 from the corresponding holes 13 is determined by the displacement of the frame 6a caused by the action of the projections 9 mounted on the male member 3 which abut against the frame 6a and urge it away from the cavity 4a against the action of the springs 8. In this way, the frame 6a is lowered with respect to the mouth of the cavity 4a and the pins 7 may escape from the holes 13.

The projection of the projections 9 from the male member 3 may be advantageously adjusted so as to be able to regulate their action on the frame 6a and therefore the moment of disengagement of the plate-like element 10 from the frame 6a.

In a variant of the present invention, the peripheral region 12 of the plate-like element 10 may be accompanied in a controlled manner towards the cavity 4a of the female member 4 during the deformation of the central region 11 imparted by the head 3a.

In particular, the plate-like element 10 may be gripped at its peripheral region 12 by a clamp 20 designed to hold the plate-like element 10 when the (static) action of the pins 7 on its own could lead to tearing of the sheets 10a forming the plate-like element 10.

The clamp 20 is preferably disposed between the frame 6a and the cavity 4a and its holding action takes place as an alternative or in addition to the phase of disengagement of the frame 6a from the holes 13.

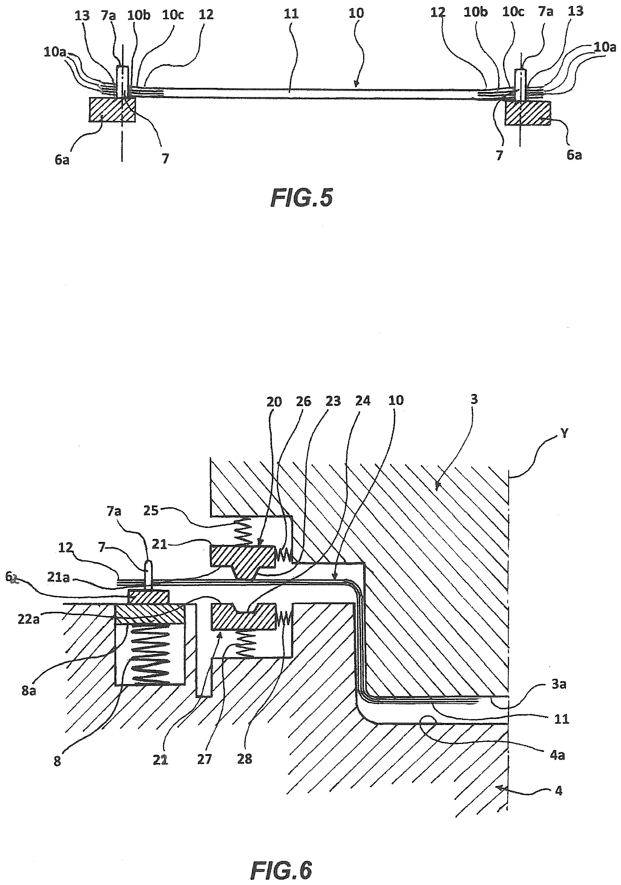

In detail, the clamp 20, as shown in detail in Fig. 6, comprises a first jaw 21 mounted on the male member 3 and a second jaw 22 mounted on the female member 4 in alignment in the direction Y with the first jaw 21.

The jaws 21 and 22 preferably have a surface of abutment 21a, 22a with the plate-like element 10, respectively profiled with a central projection 23 on one of the two jaws and a corresponding groove 24 on the other of the two jaws.

The jaws 21, 22 are clamped against one another with a predetermined force and may preferably slide in a horizontal plane perpendicular to the direction of displacement Y so as to accompany the peripheral region 12 of the plate-like element 10 towards the cavity 4a following the traction exerted by the head 3a.

To that end, the first jaw 21 is preferably mounted on a first spring 25 and on a second spring 26 operating between the male member 3 and the first jaw 21 respectively in the substantially vertical direction Y and in a substantially horizontal direction perpendicular to the direction Y.

The first spring 25 opposes the vertical displacement of the first jaw 21 against the male member 3, while the second spring 26 opposes the horizontal displacement of the first jaw 21 towards the head 3a.

In a similarly preferred manner, the second jaw 22 is mounted on a first spring 27 and on a second spring 28 operating between the female member 4 and the second jaw 22 respectively in the substantially vertical direction Y and in a substantially horizontal direction perpendicular to the direction Y.

As in the case of the first jaw 21, the first spring 27 opposes the vertical displacement of the second jaw 22 against the female member 4, while the second spring 28 opposes the horizontal displacement of the second jaw 22 towards the cavity 4a.

The first springs 25 and 27 are specifically dimensioned to exert a desired holding force on the plate-like element 10, while the second springs 26 and 28 are specifically dimensioned to control the speed of displacement of the peripheral region 12 towards the cavity 4a.

Moreover, the first and second springs 25, 26, 27 and 28 may be regulated in order to adjust the force that they exert on the jaws 21 and 22.

The Applicants have in particular observed that in a plate-like element 10 of rectangular shape, the possible drawbacks due to tearing of the sheets 10a are more likely on the long side of the rectangle. In a variant of the invention, the mould 1 may therefore be provided with a respective clamp 20 solely along the longer sides of the plate-like element 10.

The thermoforming process of the present invention advantageously makes it possible to produce articles from composite polymer material, in particular self-reinforced polypropylene, of a curved shape, such as, for instance, containers, travel and transport baggage shells, personal protection articles, sports equipment and motor vehicle protection articles.

This process makes it possible to achieve various advantages with respect to known processes, the most important of which is that it is possible to obtain thermoformed products, made in particular from self-reinforced polypropylene, with higher-level mechanical properties.

It is therefore also possible to use less material to obtain a product that has the same mechanical properties as thermoformed products obtained by known processes, with resulting savings in terms of product weight and production costs.

The Applicants consider that the improved mechanical properties of the thermoformed product may be linked to the fact that the plate-like element is kept under tension along its entire perimeter after the consolidation step and up to its plastic deformation by the mould.

In that respect, the Applicants have observed that when producing a thermoformed article, for instance a suitcase shell, there is a saving of more than 10% by weight in comparison with a shell of similar dimensions and mechanical properties produced by a thermoforming process of the prior art.

A second important advantage that may be attributed to the fact that the plate-like element is held on the frame in a tensioned condition after the consolidation step, lies in the fact that the plate-like element may achieve a greater level of deformation than a similar plate-like element thermoformed after consolidation without being kept under tension.

The Applicants have observed in that respect that, by means of the process of the present invention, the plate-like element may be thermoformed to obtain a thermoformed article, for instance a suitcase shell, having a depth of more than 10% more than a suitcase shell obtained from a similar plate-like element thermoformed by a process in which the plate-like element is not kept under tension after the consolidation stage.

A further advantage lies in the fact that, by means of the process of the present invention in which the plate-like element is kept under tension along its entire perimeter after the consolidation stage and up to its subsequent thermoforming, it is possible to carry out the moulding stage using moulds of the multi-cavity type, thereby increasing production volumes with no adverse effect on the quality of the thermoformed product.

A further advantage of the invention lies in the fact that the process may be carried out using relatively simple apparatus.

The present invention thus resolves the problem discussed above with respect to the cited prior art and, at the same time, offers advantages over and above those described above.

## Claims

1. A process for thermoforming a plate-like element (10) of composite polymer material, in which a central region (11) and a peripheral region (12) surrounding said central region are defined, comprising:
- providing a mould (1) including a male member (3) shaped in a configuration that it is desired to impart to said plate-like element, and a female member (4) counter-shaped with respect to said male member, wherein said male and female members may be displaced between an operating position of said mould in which they are pressed against one another, and a non-operating position in which they are spaced from one another,
- disposing said plate-like element (10) on said mould such that its central region (11) is positioned between said male member and said female member when displaced into the non-operating position,
- holding the peripheral region (12) of said plate-like element by a plurality of pins (7) having a free end (7a) associated with said mould and engaged in a corresponding plurality of holes (13) obtained in said peripheral region,
- displacing said male member (3) and said female member (4) towards the operating position until they abut on said plate-like element and start to deform said plate-like element into the configuration of said male member and said female member, while continuing to hold the peripheral region of said plate-like element,
- completing the displacement of said male member and said female member towards the operating position and maintaining them in said operating position for a predetermined time, so as to thermoform the central region of said plate-like element into the desired configuration,
- displacing said male member and said female member into the non-operating position and removing said thermoformed plate-like element from the said mould,
**characterized in that** said pins (7) are disposed on a mobile frame (6a) which may be removed from said mould (1) in order to move said plate-like element to and from said mould, while said plate-like element is held by said pins (7).

2. A process according to claim 1, wherein the composite polymer material comprises a plurality of reinforcing fibres made from a first material and coated by a matrix made from a second thermoplastic polymer-based material said first material being a stretched thermoplastic polymer having a melting point greater than the melting point of said second material.

3. A process according to any of the preceding claims, wherein said composite material is self-reinforced polypropylene.

4. A process according to any of the preceding claims, wherein said plate-like element (10) comprises a plurality of superimposed sheets (10a) made from said composite polymer material, and is formed by superimposing said plurality of sheets (10a) on one another to form a stack of sheets separate from one another and providing said holes (13) in their peripheral region (12) and wherein, before said plate-like element is disposed in said mould, the stack of superimposed sheets (10a) is subject to a step of heating and pressure in order at least partially to melt the second material of said composite material so as to make the superimposed sheets rigid with one another in said central region (11).

5. A process according to any of claim 4, wherein a finish sheet (10b) of thermoplastic polymer material is disposed on the stack of composite material sheets in an external position with respect to said stack in order to provide said plate-like element (10) with a desired surface finish and a sheet of paper (10c) for sublimation printing on which a graphical decoration is provided is disposed above the finish sheet (10b), on the side opposite the stack of composite material sheets (10a), so that the sublimation printing of said graphical decoration on said finish sheet is obtained during said heating and pressure stage.

6. A process according to any of claims 4 or 5, wherein, when said plate-like element is disposed in said mould, said superimposed sheets are separate from one another at their peripheral region.

7. A process according to any of the preceding claims, wherein said pins (7) are disengaged from said holes (13) obtained in the peripheral region of said plate-like element before said male and said female members are fully displaced into said operating position.

8. A process according to claim 7, wherein said pins (7) are disengaged from said holes (13) obtained in the peripheral region of said plate-like element before said male and said female member are fully displaced into said operating position, when the elongation of the plate-like element (10) following thermoforming is greater than a value of approximately 15%.

9. A process according to any of claims 4 to 8, wherein said stack of separate and superimposed sheets is mounted on said frame (6a) before being made rigid in said central region (11) and said frame is then conveyed together with said plate-like element to said mould.

10. A mould (1) for thermoforming a plate-like element (10) of composite polymer material comprising:
- a male member (3) shaped in a configuration that it is desired to impart to said plate-like element, and a female member (4) counter-shaped with respect to said male member, wherein said male and female members may be displaced between an operating position of said mould in which they are pressed against one another, and a non-operating position in which they are spaced from one another,
- a movement device (5) disposed to displace the male member and/or the female member between said operating and non-operating positions,
- a holding device (6) for said plate-like element designed to hold said plate-like element (10) at its peripheral region (12), while said male member and said female member are displaced towards one another into the operating position so that they abut against the plate-like element in its central region (11), said holding device (6) comprises a plurality of pins (7) having a free end which may be engaged with said plate-like element in a corresponding plurality of holes (13) obtained in its peripheral region (12), **characterized in that** said pins (7) are disposed on a mobile frame (6a) detachably associated with said mould, in order to move said plate-like element to and from said mould, while said plate-like element is held by said pins (7).

11. A mould according to claim 10, wherein said pins (7) are disposed in sequence at a distance from adjacent pins of between 2 mm and 10 mm.

12. A mould according to claim 10 or 11, wherein said frame (6a) is positioned with respect to said female member (4) so that it may move with respect to said female member away from said male member following the displacement of said male member towards said operating position, so as to enable the disengagement of said plate-like element (10) from said frame (6a) via the free end (7a) of said pins (7).

13. A mould according to any one of claims 10 to 12, wherein a first jaw (21) and a second jaw (22) are mounted on said male member (3) and said female member (4) respectively, and are designed to abut against and hold said plate-like element (10) at its peripheral region (12) when said male member and said female member are displaced towards one another, before reaching said operating position.

14. A mould according to claim 13, wherein said first jaw (21) and said second jaw (22) are mounted on respective first springs (25, 27) designed to urge said first and second jaws against one another.

15. A mould according to claim 13 or 14, wherein said first jaw (21) and said second jaw (22) may slide respectively towards a head (3a) of said male member (3) and a cavity (4a) of said female member (4) and are provided with respective second springs (26, 28) to control the sliding of said first and second jaws towards said head and said cavity.

## Patentansprüche

1. Verfahren zum Thermoformen eines plattenförmiges Elements (10) aus einem Verbundpolymermaterial, in dem ein mittlerer Bereich (11) und ein Umfangsbereich (12), der den mittleren Bereich umgibt, definiert sind, umfassend:
- Vorsehen einer Form (1) mit einem Außenelement (3), das in einer Konfiguration ausgebildet ist, die zum Übertragen auf das plattenförmige Element wünschenswert ist, und mit einem Innenelement (4), das bezüglich des Außenelements gegengeformt ist, wobei die Außen- und Innenelemente zwischen einer Betriebsposition der Form, in der sie gegeneinander gedrückt werden, und einer Außerbetriebsposition, in der sie voneinander beabstandet sind, verschoben werden können,
- Anordnen des plattenförmigen Elements (10) auf der Form, sodass ihr mittlerer Bereich (11) zwischen dem Außenelement und dem Innenelement beim Verschieben in die Außerbetriebsposition positioniert ist,
- Halten des Umfangsbereichs (12) des plattenförmigen Elements durch eine Mehrzahl von Stiften (7) mit einem freien Ende (7a), das mit der Form verbunden ist, und die mit einer entsprechenden Mehrzahl von Bohrungen (13), die im Umfangsbereich enthalten sind, in Eingriff stehen,
- Verschieben des Außenelements (3) und des Innenelements (4) zur Betriebsposition, bis sie am plattenförmigen Element anliegen und Beginnen, das plattenförmige Element in die Konfiguration des Außenelements und Innenelements zu verformen, während der Umfangsbereich des plattenförmigen Elements weiterhin gehalten wird,
- Beenden der Verschiebung des Außenelements und Innenelements zur Betriebsposition und Aufrechterhalten in der Betriebsposition für eine vorbestimmte Zeit, um so ein Thermoformen des mittleren Bereichs des plattenförmigen Elements in die gewünschte Konfiguration auszuführen,
- Verschieben des Außenelements und Innenelements in die Außerbetriebsposition und Entfernen des thermogeformten plattenförmigen Elements von der Form, **dadurch gekennzeichnet, dass** die Stifte (7) auf einem mobilen Rahmen (6a) angeordnet sind, der von der Form (1) entfernt werden kann, um das plattenförmige Element zur und weg von der Form zu bewegen, während das plattenförmige Element durch die Stifte (7) gehalten wird.

2. Verfahren gemäß Anspruch 1, wobei das Verbundpolymermaterial eine Mehrzahl von Verstärkungsfasern aufweist, die aus einem ersten Material hergestellt und durch eine Matrix beschichtet sind, die aus einem zweiten thermoplastischen, polymer-basiertem Material hergestellt ist, wobei das erste Material ein gestrecktes thermoplastisches Polymer mit einem Schmelzpunkt ist, der größer als der Schmelzpunkt des zweiten Materials ist.

3. Verfahren gemäß einem der vorhergehenden Ansprüche, wobei das Verbundmaterial ein selbstverstärktes Polypropylen ist.

4. Verfahren gemäß einem der vorhergehenden Ansprüche, wobei das plattenförmige Element (10) eine Mehrzahl von überlagerten Schichten (10a) aufweist, die aus dem Verbundpolymermaterial hergestellt sind, und durch Überlagern der Mehrzahl von Schichten (10a) aufeinander ausgebildet wird, um einen Stapel von Schichten zu bilden, die voneinander getrennt sind und die Bohrungen (13) in seinem Umfangsbereich (12) vorsieht, und wobei, bevor das plattenförmige Element in der Form angeordnet wird, der Stapel von überlagerten Schichten (10a) einem Erwärmungsschritt und Pressschritt ausgesetzt ist, um zumindest teilweise das zweite Material des Verbundmaterials zu schmelzen, um so die überlagerten Schichten starr miteinander im mittleren Bereich (11) zu gestalten.

5. Verfahren gemäß Anspruch 4, wobei eine fertig bearbeitete Schicht (10b) des thermoplastischen Polymermaterials auf dem Stapel der Verbundmaterialschichten in einer äußeren Position bezüglich des Stapels angeordnet ist, um das plattenförmige Element (10) mit einer gewünschten Oberflächenbeschaffenheit vorzusehen, und wobei eine Papierschicht (10c) für einen Sublimationsdruck, auf dem eine grafische Gestaltung vorgesehen wird, oberhalb der fertig bearbeiteten Schicht (10b) auf der Seite angeordnet ist, die dem Stapel von Verbundmaterialschichten (10a) gegenüberliegt, sodass der Sublimationsdruck der grafischen Gestaltung auf der fertig bearbeiteten Schicht während der Erwärmungs- und Pressstufe erhalten wird.

6. Verfahren gemäß Anspruch 4 oder 5, wobei, wenn das plattenförmige Element in der Form angeordnet ist, die überlagerten Schichten an ihrem Umfangsbereich voneinander getrennt sind.

7. Verfahren gemäß einem der vorgehenden Ansprüche, wobei die Stifte (7) aus den Bohrungen (13), die im Umfangsbereich des plattenförmigen Elements enthalten sind, ausgerückt sind, bevor die Außen- und Innenelemente vollständig in die Betriebsposition verschoben sind.

8. Verfahren gemäß Anspruch 7, wobei die Stifte (7) aus den Bohrungen (13) ausgerückt sind, die im Umfangsbereich des plattenförmigen Elements enthalten sind, bevor das Außen- und Innenelement vollständig in die Betriebsposition verschoben sind, wenn die Ausdehnung des plattenförmigen Elements (10), die dem Thermoformen folgt, größer als ein Wert von ungefähr 15 % ist.

9. Verfahren gemäß einem der Ansprüche 4 bis 8, wobei der Stapel von getrennten und überlagerten Schichten auf dem Rahmen (6a) vor dem starren Gestalten im mittleren Bereich (11) befestigt ist und der Rahmen danach zusammen mit dem plattenförmigen Element zur Form gefördert wird.

10. Form (1) zum Thermoformen eines plattenförmigen Elements (10) aus einem Verbundpolymermaterial, umfassend:
- ein Außenelement (3), das in einer Konfiguration gestaltet ist, die zum Übertragen auf das plattenförmige Element wünschenswert ist, und ein Innenelement (4), das bezüglich des Außenelements gegengeformt ist, wobei die Außen- und Innenelemente zwischen einer Betriebsposition der Form, in der sie gegeneinander gepresst werden, und einer Außerbetriebsposition, in der sie voneinander beabstandet sind, verschoben werden können,
- eine Bewegungsvorrichtung (5), die angeordnet ist, um das Außenelement und/oder das Innenelement zwischen den Betriebs- und Außerbetriebspositionen zu verschieben,
- eine Haltevorrichtung (6) für das plattenförmige Element, die ausgebildet ist, um das plattenförmige Element (10) an seinem Umfangsbereich (12) zu halten, während das Außenelement und das Innenelement zueinander in die Betriebsposition verschoben werden, sodass sie am plattenförmigen Element in seinem mittleren Bereich (11) anliegen, wobei die Haltevorrichtung (6) eine Mehrzahl von Stiften (7) mit einem freien Ende aufweist, die mit dem plattenförmigen Element in einer entsprechenden Mehrzahl von Bohrungen (13), die in seinem Umfangsbereich (12) enthalten sind, in Eingriff stehen können,
**dadurch gekennzeichnet, dass** die Stifte (7) auf einem mobilen Rahmen (6a) angeordnet sind, der mit der Form entfernbar verbunden ist, um das plattenförmige Element zur und weg von der Form zu bewegen, während das plattenförmige Element durch die Stifte (7) gehalten wird.

11. Form gemäß Anspruch 10, wobei die Stifte (7) der Reihe nach von benachbarten Stiften mit einem Abstand zwischen 2 mm und 10 mm angeordnet sind.

12. Form gemäß Anspruch 10 oder 11, wobei der Rahmen (6a) bezüglich des Innenelements (4) positioniert ist, sodass er bezüglich des Innenelements weg vom Außenelement, das der Verschiebung des Außenelements folgt, zur Betriebsposition bewegen kann, um so das Ausrücken des plattenförmigen Elements (10) vom Rahmen (6a) über das freie Ende (7a) der Stifte (7) zu ermöglichen.

13. Form gemäß einem der Ansprüche 10 bis 12, wobei eine erste Klemmbacke (21) und eine zweite Klemmbacke (22) jeweils auf dem Außenelement (3) und dem Innenelement (4) befestigt sind, und die ausgebildet sind, um am plattenförmigen Element (10) an seinem Umfangsbereich (12) anzuliegen und es zu halten, wenn das Außenelement und Innenelement zueinander verschoben werden, bevor sie die Betriebsposition erreichen.

14. Form gemäß Anspruch 13, wobei die erste Klemmbacke (21) und die zweite Klemmbacke (22) auf jeweiligen ersten Federn (25, 27) befestigt sind, die ausgebildet sind, um die ersten und zweiten Klemmbacken gegeneinander vorzuspannen.

15. Form gemäß Anspruch 13 oder 14, wobei die erste Klemmbacke (21) und die zweite Klemmbacke (22) jeweils zu einem Kopf (3a) des Außenelements (3) und einer Ausnehmung (4a) des Innenelements (4) gleiten können und mit jeweiligen zweiten Federn (26, 28) versehen sind, um das Gleiten der ersten und zweiten Klemmbacken zum Kopf und zur Ausnehmung zu steuern.

## Revendications

1. Procédé de thermoformage d'un élément de type plaque (10) en matériau polymère composite, dans lequel une région centrale (11) et une région périphérique (12) entourant ladite région centrale sont définies, comprenant :
- la fourniture d'un moule (1) comportant un élément mâle (3) formé selon une configuration que l'on désire conférer audit élément de type plaque, et un élément femelle (4) formé de façon complémentaire par rapport audit élément mâle, dans lequel lesdits éléments mâle et femelle peuvent être déplacés entre une position de fonctionnement dudit moule dans laquelle ils sont pressés l'un contre l'autre, et une position de non fonctionnement dans laquelle ils sont éloignés l'un de l'autre,
- la disposition dudit élément de type plaque (10) sur ledit moule de sorte que sa région centrale (11) soit positionnée entre ledit élément mâle et ledit élément femelle lorsqu'ils sont déplacés dans la position de non fonctionnement,
- le maintien de la région périphérique (12) dudit élément de type plaque par une pluralité de broches (7) ayant une extrémité libre (7a) associée audit moule et mise en prise dans une pluralité de trous correspondante (13) obtenue dans ladite région périphérique,
- le déplacement dudit élément mâle (3) et dudit élément femelle (4) vers la position de fonctionnement jusqu'à ce qu'ils viennent en butée contre ledit élément de type plaque et commencent à déformer ledit élément de type plaque selon la configuration dudit élément mâle et dudit élément femelle, tout en continuant à maintenir la région périphérique dudit élément de type plaque,
- le déplacement complet dudit élément mâle et dudit élément femelle vers la position de fonctionnement et leur maintien dans ladite position de fonctionnement pendant un laps de temps prédéfini, de manière à thermoformer la région centrale dudit élément de type plaque selon la configuration désirée,
- le déplacement dudit élément mâle et dudit élément femelle dans la position de non fonctionnement et le retrait dudit élément de type plaque thermoformé dudit moule,
**caractérisé en ce que** lesdites broches (7) sont disposées sur un cadre mobile (6a) qui peut être extrait dudit moule (1) afin de déplacer ledit élément de type plaque vers et hors dudit moule, tandis que ledit élément de type plaque est maintenu par lesdites broches (7).

2. Procédé selon la revendication 1, dans lequel le matériau polymère composite comprend une pluralité de fibres de renfort faite à partir d'un premier matériau et revêtue par une matrice faite à partir d'un second matériau à base de polymère thermoplastique, ledit premier matériau étant un polymère thermoplastique étiré présentant un point de fusion supérieur au point de fusion dudit second matériau.

3. Procédé selon l'une quelconque des revendications précédentes, dans lequel ledit matériau composite est un polypropylène auto-renforcé.

4. Procédé selon l'une quelconque des revendications précédentes, dans lequel ledit élément de type plaque (10) comprend une pluralité de feuilles superposées (10a) faite à partir dudit matériau polymère composite, et est formé par superposition de ladite pluralité de feuilles (10a) les unes sur les autres pour former une pile de feuilles distinctes les unes des autres et fournissant lesdits trous (13) dans leur région périphérique (12) et dans lequel, avant que ledit élément de type plaque ne soit disposé dans ledit moule, la pile de feuilles superposées (10a) est soumise à une étape de chauffage et de pression afin de faire fondre au moins partiellement le second matériau dudit matériau composite de manière à rendre rigide les feuilles superposées les unes par rapport aux autres dans ladite région centrale (11).

5. Procédé selon l'une quelconque de la revendication 4, dans lequel une feuille de finition (10b) en matériau polymère thermoplastique est disposée sur la pile de feuilles en matériau composite dans une position externe par rapport à ladite pile afin de fournir audit élément de type plaque (10) une finition de surface désirée et une feuille de papier (10c) pour une impression par sublimation sur laquelle une décoration graphique est fournie, est disposée au-dessus de la feuille de finition (10b), sur le côté opposé à la pile de feuilles en matériau composite (10a), de sorte que l'impression par sublimation de ladite décoration graphique sur ladite feuille de finition soit obtenue pendant ladite étape de chauffage et de pression.

6. Procédé selon l'une quelconque des revendications 4 ou 5, dans lequel, lorsque ledit élément de type plaque est disposé dans ledit moule, lesdites feuilles superposées sont séparées les unes des autres au niveau de leur région périphérique.

7. Procédé selon l'une quelconque des revendications précédentes, dans lequel lesdites broches (7) sont désaccouplées desdits trous (13) obtenus dans la région périphérique dudit élément de type plaque avant que lesdits éléments mâle et femelle ne soient complètement déplacés vers ladite position de fonctionnement.

8. Procédé selon la revendication 7, dans lequel lesdites broches (7) sont désaccouplées desdits trous (13) obtenus dans la région périphérique dudit élément de type plaque avant que lesdits éléments mâle et femelle ne soient complètement déplacés vers ladite position de fonctionnement, lorsque l'allongement de l'élément de type plaque (10) suite au thermoformage est supérieur à une valeur d'approximativement 15 %.

9. Procédé selon l'une quelconque des revendications 4 à 8, dans lequel ladite pile de feuilles distinctes et superposées est montée sur ledit cadre (6a) avant de les rendre rigide dans ladite région centrale (11) et ledit cadre est ensuite acheminé conjointement avec ledit élément de type plaque vers ledit moule.

10. Moule (1) pour thermoformer un élément de type plaque (10) en matériau polymère composite comprenant :
- un élément mâle (3) formé selon une configuration que l'on désire conférer audit élément de type plaque, et un élément femelle (4) formé de façon complémentaire par rapport audit élément mâle, dans lequel lesdits éléments mâle et femelle peuvent être déplacés entre une position de fonctionnement dudit moule dans laquelle ils sont pressés l'un contre l'autre, et une position de non fonctionnement dans laquelle ils sont éloignés l'un de l'autre,
- un dispositif de mise en mouvement (5) disposé pour déplacer l'élément mâle et/ou l'élément femelle entre lesdites positions de fonctionnement et de non fonctionnement,
- un dispositif de maintien (6) pour ledit élément de type plaque conçu pour maintenir ledit élément plaque (10) au niveau de sa région périphérique (12), tandis que ledit élément mâle et ledit élément femelle sont déplacés l'un vers l'autre dans la position de fonctionnement de sorte qu'ils viennent en butée contre l'élément de type plaque dans sa région centrale (11), ledit dispositif de maintien (6) comprend une pluralité de broches (7) présentant une extrémité libre qui peut être mise en prise avec ledit élément de type plaque dans une pluralité de trous correspondante (13) obtenue dans sa région périphérique (12),
**caractérisé en ce que** lesdites broches (7) sont disposées sur un cadre mobile (6a) associé de manière détachable avec ledit moule, afin de déplacer ledit élément de type plaque vers et hors dudit moule, tandis que ledit élément de type plaque est maintenu par lesdites broches (7).

11. Moule selon la revendication 10, dans lequel lesdites broches (7) sont disposées en séquence à une certaine distance des broches adjacentes comprise entre 2 mm et 10 mm.

12. Moule selon la revendication 10 ou 11, dans lequel ledit cadre (6a) est positionné par rapport audit élément femelle (4) de sorte qu'il puisse se déplacer par rapport audit élément femelle à l'écart dudit élément mâle suite au déplacement dudit élément mâle vers ladite position de fonctionnement, de manière à permettre le désaccouplement dudit élément de type plaque (10) dudit cadre (6a) par l'intermédiaire de l'extrémité libre (7a) desdites broches (7).

13. Moule selon l'une quelconque des revendications 10 à 12, dans lequel une première mâchoire (21) et une seconde mâchoire (22) sont montées sur ledit élément mâle (3) et ledit élément femelle (4) respectivement, et sont conçues pour venir en butée contre et maintenir ledit élément de type plaque (10) au niveau de sa région périphérique (12) lorsque ledit élément mâle et ledit élément femelle sont déplacés l'un vers l'autre, avant d'atteindre ladite position de fonctionnement.

14. Moule selon la revendication 13, dans lequel ladite première mâchoire (21) et ladite seconde mâchoire (22) sont montées sur des premiers ressorts respectifs (25, 27) conçus pour solliciter lesdites première et seconde mâchoires l'une contre l'autre.

15. Moule selon la revendication 13 ou 14, dans lequel ladite première mâchoire (21) et ladite seconde mâchoire (22) peuvent coulisser respectivement vers une tête (3a) dudit élément mâle (3) et une cavité (4a) dudit élément femelle (4) et sont dotées de seconds ressorts respectifs (26, 28) pour commander le coulissement desdites première et seconde mâchoires vers ladite tête et ladite cavité.
